# EUROPEAN PATENT APPLICATION

(11) **EP 2 415 656 A1**
(43) Date of publication of application: **08.02.2012**
(21) Application number: 10174898.6
(22) Date of filing: 01.09.2010
(51) Int. Cl.: B62J 1/00

(54) **Shell for bicycle saddle**

(30) Priority: 04.08.2010 TW 099125938
(71) Applicant: Velo Enterprise Co., Ltd., Dajia Township, Taichung County 437 (TW)
(72) Inventor: Yu, Tsai-Yun, 437, Taichung County (TW)
(74) Representative: Becker Kurig Straus

(57) **Abstract**

A shell (10) for a bicycle saddle includes a body (20) that has a narrow anterior portion (21) for fitting between a cyclist's crotch and a wide posterior portion (22) for supporting the cyclist's buttocks. The wide posterior portion of the shell is defined with left and right halves, each of which has a slot (24a, 24b) penetrating through top and bottom surfaces (222, 224) of the wide posterior portion, extending substantially longitudinally and having an open end (242a, 242b) at a periphery edge of the wide posterior portion and a closed end (244a, 244b) in the wide posterior portion, such that a left wing (29a) and a right wing (29b), which are bendable elastically and correspond to the cyclist's crotch, are respectively provided at the left half and the right half to minimize the hindering and uncomfortableness of the cyclist's riding.

## Description

### BACKGROUND OF THE INVENTION

### 1. Field of the Invention

The present invention relates generally to bicycle saddles and more particularly, to a shell for a bicycle saddle.

### 2. Description of the Related Art

It is well known that a bicycle saddle is used in cooperation with a clamping device to be mounted to a seat post of a bicycle, so that a cyclist can sit or lean on the saddle. In general, a bicycle saddle includes a shell that forms the basic configuration of the saddle, a resilient pad covering the shell for making the saddle more comfortable, and a protective cover layer on the resilient pad. In order to provide sufficient mechanical strength to support the cyclist, the shell must be rigid with a sufficient hardness, causing the cyclist's crotch hindered and uncomfortable while the cyclist's legs reciprocally swing back and forth.

To resolve the above-mentioned problems, US Patent No. 7,367,619 disclosed an improved shell for a bicycle saddle, which has two recesses located at the positions corresponding to the cyclist's crotch and each provided with a plurality of transversely extending slots each having an opening on the edge of the shell. Because of those slots, the two recesses can be bent elastically while being pressed by the cyclist's crotch, thereby reducing the hindering and uncomfortableness of cyclist's riding. However, the shell having a number of transversely extending slots is too complicated in configuration to be conveniently made.

### SUMMARY OF THE INVENTION

The present invention has been accomplished in view of the above-noted circumstances. It is an objective of the present invention to provide a shell for a bicycle saddle, which is provided with elastically bendable left and right wings at locations corresponding to the cyclist's crotch to minimize the hindering and uncomfortableness of the cyclist's riding, and is simple in configuration and thus can be easily made.

To attain the above objective, the present invention provides a shell for a bicycle saddle, which comprises a body that has a narrow anterior portion for fitting between a cyclist's crotch and a wide posterior portion for supporting the cyclist's buttocks. The wide posterior portion of the body has left and right halves, each of which has a slot penetrating through top and bottom surfaces of the wide posterior portion. In addition, each slot extends substantially longitudinally and has an open end at a periphery edge of the wide posterior portion and a closed end in the wide posterior portion. By means of the design of the substantially longitudinally extending slots, elastically bendable left and right wings are formed corresponding to the cyclist's crotch to minimize the hindering and uncomfortableness of cyclist's riding. In addition, the shell is simply in figuration and thus it can be easily made.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is an exploded view of a shell for a bicycle saddle in accordance with a preferred embodiment of the present invention;
FIG. 2 is a side view of the shell for a bicycle saddle according to the preferred embodiment of the present invention;
FIG. 3 is a sectional view taken along line 3-3 of FIG. 2;
FIG. 4 is a sectional view taken along line 4-4 of FIG. 2; and
FIG. 5 is an exploded view of the shell for a bicycle saddle according to the preferred embodiment of the present invention and a cushion pad to be mounted on the shell.

### DETAILED DESCRIPTION OF THE INVENTION

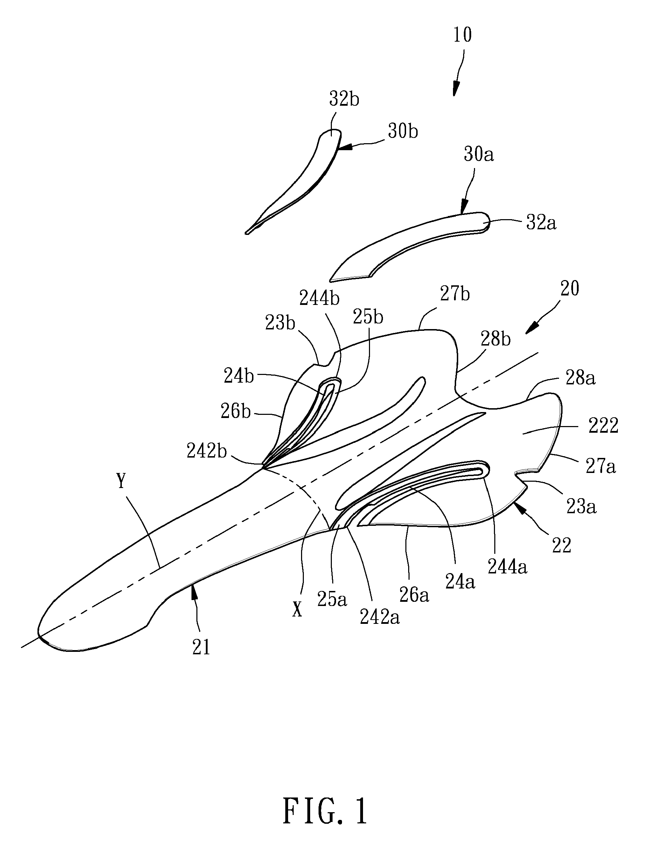

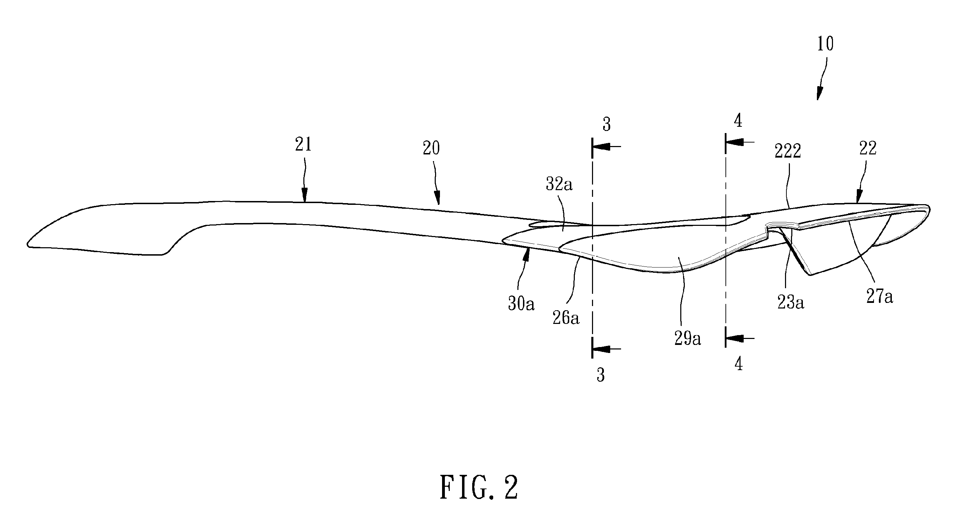

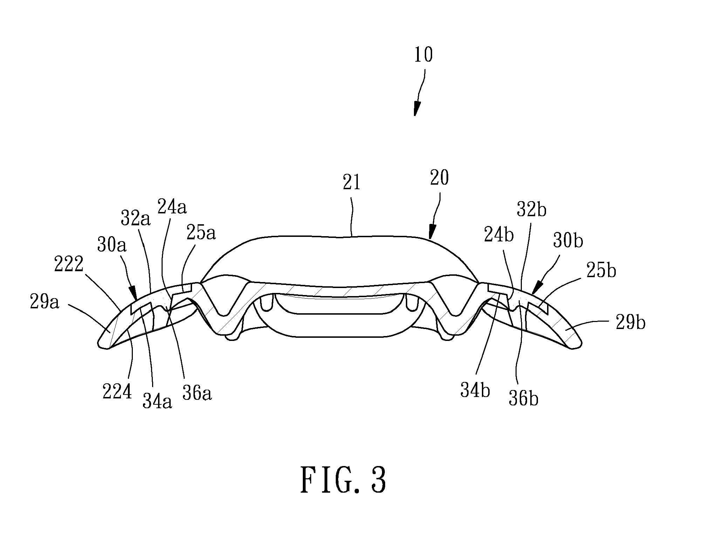

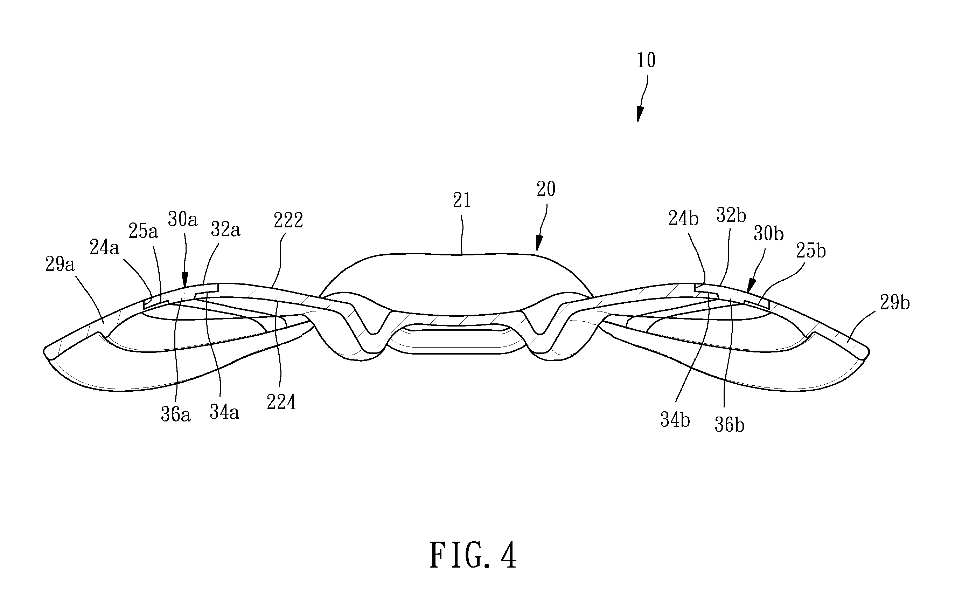

As shown in FIGS. 1-4, a shell, denoted by reference numeral **10,** in accordance with a preferred embodiment of the present invention is a component of a bicycle saddle. The shell **10** includes a body **20** and two fillers **30a, 30b.**

The body **20,** which is integrally made from a plastic material by modeling, can be divided into a narrow anterior portion **21** and a wide posterior portion **22** by an imaginary transverse dividing line **X.** As shown in the drawings, the width of the wide posterior portion **22,** which extends backward from the narrow anterior portion **21,** is larger than the width of the narrow anterior portion **21.** The body **20** including the narrow anterior portion **21** and the wide posterior portion **22** can also be divided into a left half and a right half symmetrically by an imaginary longitudinal axis **Y.**

The shape of the body **20** is similar to those of conventional shells for a bicycle saddle, but the left half and the right half of the wide posterior portion **22** each have a notch **23a, 23b** penetrating through a top surface **222** of the wide posterior portion **22** and a bottom surface **224** of the wide posterior portion **22,** and a slot **24a, 24b** extending substantially longitudinally. It will be appreciated that the phrase "the slot extending substantially longitudinally" mentioned hereinafter refers to that the slot basically extends backwardly from a front side of the posterior potion **22** toward a rear side of the posterior portion **22,** but not limited to being parallel to the imaginary longitudinal axis **Y.** For example, as shown in FIGS. 1-5, the slots **24a, 24b** slightly curvedly extend from the front side towards the rear side of the posterior portion **22.** In addition, each of the slots **24a, 24b** penetrates through the top and bottom surfaces **222, 224** of the wide posterior portion **22** and has a T-shaped crosssection, which means each of the slots **24a, 24b** has a step **25a, 25b.**

The periphery edges of the left and right halves of the wide posterior portion **22** each can be divided into a front edge **26a, 26b,** a lateral edge **27a, 27b,** and a rear edge **28a, 28b.** The slot **24a** has an open end **242a** located at the front edge **26a** of the left half of the wide posterior portion **22,** and a body section backwards and slightly curvedly extending from the open end **242a** toward the lateral edge **27a** and terminating with a closed end **244a** in the wide posterior portion **22.** Similarly, the slot **24b** has an open end **242b** located at the front edge **26b** of the right half of the wide posterior portion **22,** and a body section backwards and slightly curvedly extending from the open end **242b** toward the side edge **27b** and terminating with a closed end **244b** in the wide posterior portion **22.** The notches **23a, 23b** are respectively located at downstream positions of the slots **24a, 24b** and correspond to the closed ends **244a, 244b** of the slots **24a, 24b** respectively. Specifically speaking, the notches **23a, 23b** respectively extend from the lateral edges **27a, 27b** toward the closed ends **244a, 244b** of the slots **24a, 24b.**

The fillers **30a, 30b,** the hardness of which is less than the hardness of the wide posterior portion **22** of the body **20,** are made from a plastic material or other resilient material into shapes complementary to the slots **24a, 24b** respectively. That is, the fillers **30a, 30b** each have a T-shaped crosssection including a top surface **32a, 32b,** a contact surface **34a, 34b** opposite to the top surface **32a, 32b,** and a rib **36a, 36b** protruding outwardly from the contact surface **34a, 34b.** The fillers **30a, 30b** are respectively set in the slots **24a, 24b** in such a way that the contact surfaces **34a, 34b** are respectively attached to the steps **25a, 25b** and the top surfaces **32a, 32b** are flush with the top surface **222** of the wide posterior portion **22** of the body **20.**

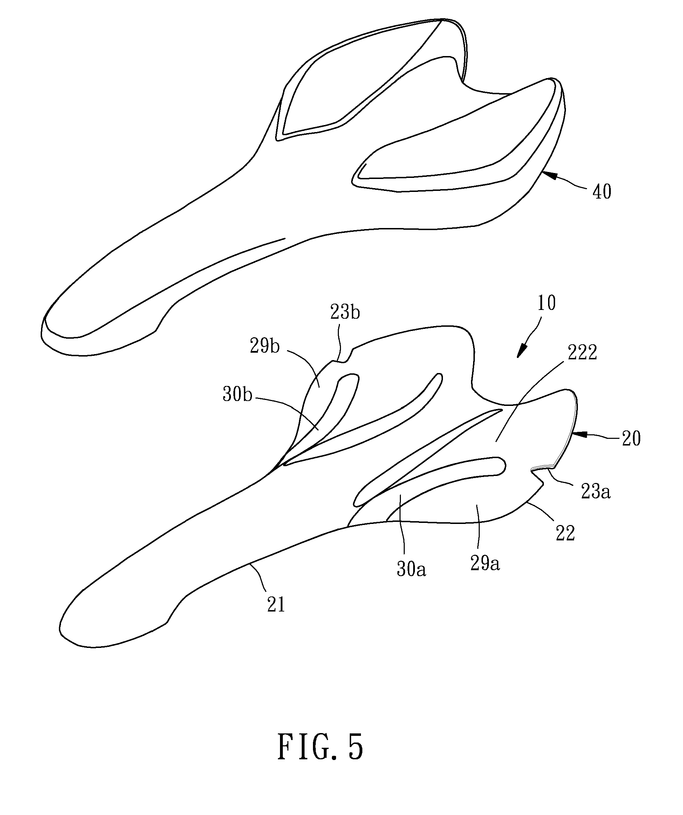

As shown in FIG. 5, on the aforesaid shell **10** a cushion pad **40** can be further mounted to form a saddle. By means of rails (not shown) installed on the bottom side of the shell **10** and a clamping device (not shown), the saddle including the shell **10** and the cushion pad **40** can be mounted to a seat post (not shown) of a bicycle for a cyclist to sit or lean on. When the saddle including the shell **10** of the present invention is in use, the narrow anterior portion **21** is positioned between the cyclist's crotch and the wide posterior portion **22** is adapted for supporting the cyclist's buttocks.

As shown in FIGS. 1-5 and above illustration, a left wing **29a,** which is defined by the periphery edge of the wide posterior portion **22** of the body **20,** the notch **23a** and the slot **24a,** and a right wing **29b,** which is defined by the periphery edge of the wide posterior portion **22** of the body **20,** the notch **23b** and the slot **24b,** are provided at the left half and the right half of the wide posterior portion **22** respectively. When the saddle including the shell **10** of the present invention is in use the left wing **29a** and the right wing **29b** correspond in location to the cyclist's crotch and are bendable elastically when they receive force generated by the reciprocal swinging motions of the cyclist's legs, thereby minimizing the hindering and uncomfortableness of cyclist's riding. In addition, the body **20** of the shell **10** is simple in configuration such that the shell **10** can be made easily. Besides, the fillers **30a, 30b** can not only integrate and smooth the top surface **222** of the wide posterior portion **22,** which makes the shell **10** and the flexible pad **40** connect more perfectly and smoothly, but also increase the structural strength of the shell **10.**

## Claims

1. A shell for a bicycle saddle, comprising a body (20) that has a narrow anterior portion (21) for fitting between a cyclist's crotch and a wide posterior portion (22) for supporting the cyclist's buttocks, the shell (10) being **characterized in that**:
the wide posterior portion (22) of the body (20) has left and right halves, each of which has a slot (24a, 24b) penetrating through top and bottom surfaces (222, 224) of the wide posterior portion (22), extending substantially longitudinally and having an open end (242a, 242b) at a periphery edge of the wide posterior portion (22) and a closed end (244a, 244b) in the wide posterior portion (22).

2. The shell as claimed in claim 1, **characterized in that** the left half of the wide posterior portion has a front edge (26a) where the open end (242a) of the slot (24a) of the left half is located, and the right half of the wide posterior portion has a front edge (26b) where the open end (242b) of the slot (24b) of the right half is located.

3. The shell as claimed in claim 2, **characterized in that** the slot (24a) of the left half of the wide posterior portion extends from the open end (242a) at the front edge (26a) of the left half toward a lateral edge (27a) of the left half of the wide posterior portion, and the slot (24b) of the right half of the wide posterior portion extends from the open end (242b) at the front edge (26b) of the right half toward a lateral edge (27b) of the right half of the wide posterior portion.

4. The shell as claimed in claim 3, **characterized in that** the lateral edge (27a) of the left half of the wide posterior portion is provided with a notch (23a) corresponding to the closed end (244a) of the slot (24a) of the left half of the wide posterior portion; the lateral edge (27b) of the right half of the wide posterior portion is provided with a notch (23b) corresponding to the closed end (244b) of the slot (24b) of the right half of the wide posterior portion.

5. The shell as claimed in claim 3, **characterized in that** the shell further comprises two fillers (30a, 30b) set in the slots (24a, 24b) respectively; wherein the hardness of the fillers is less than the hardness of the wide posterior portion of the body.

6. The shell as claimed in claim 5, **characterized in that** each of the slots (24a, 24b) has a T-shaped crosssection and the shapes of the fillers (30a, 30b) are complementary to the shapes of the slots respectively such that a top surface (32a, 32b) of each of the fillers (30a, 30b) is flush with the top surface (222) of the wide posterior portion of the body.

7. The shell as claimed in claim 1, **characterized in that** the left and right halves of the wide posterior portion of the body each have a notch (23a, 23b) extending from the periphery edge of the wide posterior portion of the body toward the closed end (244a, 244b) of one of the slots (24a, 24b).

8. The shell as claimed in claim 1, **characterized in that** the shell further comprises two fillers (30a, 30b) set in the slots (24a, 24b) respectively; wherein the hardness of the fillers is less than the hardness of the wide posterior portion of the body.

9. The shell as claimed in claim 8, **characterized in that** each of the slots (24a, 24b) has a T-shaped crosssection and the shapes of the fillers (30a, 30b) are complementary to the shapes of the slots respectively such that a top surface (32a, 32b) of each of the fillers (30a, 30b) is flush with the top surface (222) of the wide posterior portion of the body.

10. The shell as claimed in claim 9, **characterized in that** the left and right halves of the wide posterior portion of the body each have a notch (23a, 23b) extending from the periphery edge of the wide posterior portion of the body toward the closed end (244a, 244b) of one of the slots.
